Europäisches Patentamt

European Patent Office

Office européen des brevets

(19)

(11) Publication number: **0 058 447**

**A1**

(12)

# EUROPEAN PATENT APPLICATION

(21) Application number: **82200118.6**

(51) Int. Cl.³: **C 08 L 27/06**

(22) Date of filing: **01.02.82**

(30) Priority: **13.02.81 NL 8100700**

(43) Date of publication of application:
**25.08.82 Bulletin 82/34**

(84) Designated Contracting States:
**BE DE FR GB IT NL SE**

(71) Applicant: **Akzo N.V.**
**Velperweg 76**
**NL-6824 BM Arnhem(NL)**

(72) Inventor: **De Jonge, Cornelis Reinier H.I.**
**Thomas à Kempisstraat 12**
**NL-7009 KT Doetinchem(NL)**

(72) Inventor: **Hoentjen, Gerrit**
**Hessepas 26**
**NL-6931 HJ Westervoort(NL)**

(74) Representative: **Sieders, René et al,**
**P.O. Box 314**
**NL-6800 AH Arnhem(NL)**

(54) Stabilizer composition for polymers or copolymers of vinyl chloride, polymer composition comprising such a stabilizer composition and shaped articles prepared therefrom.

(57) Stabilizer composition for polymers or copolymers of vinyl chloride which comprise a metal salt of an acid, an organic stabilizer compound and ditrimethylol propane in combination with a synergistic amount of some different polyol having 5 to 15 carbon atoms and 2 to 10 hydroxyl groups and a melting point not lower than 100°C.

These non-toxic compositions synergistically contribute to the heat stability of vinyl or vinylidene halide polymers.

EP 0 058 447 A1

COMPLETE DOCUMENT

Croydon Printing Company Ltd.

Stabilizer composition for polymers or copolymers of vinyl chloride, polymer composition comprising such a stabilizer composition and shaped articles prepared therefrom.

The invention relates to a stabilizer composition for polymers or copolymers of vinyl chloride in which an organic stabilizer, a metal salt of an acid, organic compound and a polyol are incorporated, to polymers or copolymers of vinyl choride in which a stabilizing amount of said composition is incorporated, and to shaped articles that are entirely or partly made of these stabilized polymers. Stabilizer compositions in which an organic stabilizer, a metal salt of an acid, organic compound and a polyol are incorporated are described in, int.al., British Patent Specification 1 099 731 and British Patent Specification 1 230 933. Although the stabilizer compositions described in it make it possible to obtain polymers or copolymers of vinyl chloride possessing reasonable thermal stability and clarity, there is yet need for more effective stabilizer compositions. Especially needed are stabilizer compositions that are non-toxic and suitable for use in industrial packaging material for foodstuffs. The present invention provides a stabilizer composition for polymers or copolymers of vinyl chloride of the known type indicated above and displaying improved thermal stability.
The invention consists in that the polyol used is ditrimethylol propane in combination with a synergistic amount of some different polyol having 5 to 15 carbon atoms and 2 to 10 hydroxyl groups and a melting point not lower than 100°C.

It should be added that the use of ditrimethylol propane in combination with some other polyol, viz. a mixture of trimethylol propane and pentaerythritol is described in British Patent Specification 1 400 919. Ditrimethylol propane is mentioned in it along with a great many other polyols. No mention is made in it at all of an organic stabilizer. An article by Abbas and Soervik in J. Vinyl Technol. (1980) 2 (2), pp. 87-94, does refer to it in discussing the results of testing a great many polyols for their effectiveness when used as co-stabilizers of a calcium/zinc system. However, it does not make any suggestions about the use of a combination of ditrimethylol propane with some other polyol

0058447
ACR 1852 R

to produce the valuable effect of the stabilizer compositions according to the present invention. The only polyol combination mentioned in it is a commercially available mixture of trimethylol propane and pentaerythritol.

It has been found that the synergistic effect of the stabilizer compositions according to the invention is generally obtained when the weight ratio between the ditrimethylol propane and the other polyol is in the range of from 6:1 to 1:3.

As examples of the polyols that may be used in combination with ditrimethylol propane in the stabilizer compositions according to the invention may be mentioned: mannitol, sorbitol, pentaerythritol, dipentaerythritol and/or tripentaerythritol.

It has been found that when the other polyol is a polyol having secondary hydroxyl groups, the weight ratio between the ditrimethylol propane and this polyol is preferably in the range of from 6:1 to 2:1.

If, however, the other polyol is a polyol having primary hydroxyl groups, then preference is given to a weight ratio between ditrimethylol propane and this polyol in the range of from 3:1 to 1:1.

Suitable for use in the stabilization of polyvinyl chloride or copolymers thereof are a great many organic stabilizers known from the literature.

Examples thereof include α-phenyl indole, phenyl urea, N,N'-diphenyl thiourea, benzoyl alkaloyl methane having 12 to 18 carbon atoms in the alkaloyl group and/or a nitrogen-free ketoacetic acid compound having at least 8 carbon atoms. Benzoyl alkaloyl methane forms part of a large group of organic stabilizers described in German Patent Application 2 600 516. Nitrogen-free ketoacetic acid compounds having at least 8 carbon atoms are described in British Patent Specification 1 099 731.

Benzoyl alkaloyl methane is commercialized by Rhône Poulenc under the trade name Rhodiastab R50 and comprises a mixture of, int.al., benzoylstearoyl methane and benzoyl palmitoyl methane.

Particularly the stearyl ester of acetyl acetic acid known from the last-mentioned patent publication has been found to be particularly suitable for use in the stabilizer compositions of the present application.

Various metals qualify for use in a metal salt of an acid, organic compound. The metal may be an alkali metal or an alkaline earth metal, such as sodium, potassium, lithium, calcium, strontium, magnesium and barium. Also mixtures of salts of various metals may be used, it being known that many of these mixtures produce improved effects, such as mixtures of zinc salts, cadmium salts, tin salts, lead salts, antimony salts, magnesium salts, bismuth salts, iron salts, cobalt salts, nickel and/or copper salts with the alkali metal salts and/or alkaline earth metal salts, for instance: potassium stearates and zinc stearates, as described in U.S. Patent Specification 2 446 976, and mixed cadmium salts, lead salts or calcium salts and alkali metal salts, for instance: sodium salts and potassium salts, as described in U.S. Patent Specification 2 181 478. When the present stabilizer compositions are employed in polymers that get into contact with food, it is preferred that use should be made of one or more metal salts of magnesium, calcium or zinc. The amount of metal salt to be included in the polymer is usually in the range of 0,5 to 3 parts per 100 parts of the polymer. As suitable organic component of the metal salt may be used many acid, organic compounds. The most important requirement they must satisfy is that in the amount in which the metal salt formed therefrom is to be added it should be compatible with the polymer to be stabilized. Generally, the organic compound to be used contains at least 6 carbon atoms. Examples of suitable organic compounds include the aliphatic and cycloaliphatic monocarboxylic acids that may be substituted or not with halogen atoms, sulphur and hydroxyl groups. Also suitable for use are substituted or unsubstituted aromatic acids. Examples of suitable substituents include halogen atoms, alkyl groups and alkenyl groups. Examples of acids used in the form of the metal salts thereof include : caproic acid, caprylic acid, decanecarboxylic acid, lauric acid, palmitic acid, stearic acid, oleic acid, ricinoleic acid, ethylacetylacetic acid, benzoic acid, phenylacetic acid, salicylic acid, o-benzoylbenzoic acid, naphthenic acid, methylfuran carboxylic acid and partially esterified dibasic acids, such as the monobutyl ester of phthalic acid and the 2-ethoxyethyl monoester of maleic acid. Alternatively, in the stabilizer compositions according to the present invention there may be incorporated the metal salts derived from the highly branched telomeric monocarboxylic acids according to U.S. Patent Specification 4 283 314.

Their use offers the advantage that in many cases there is no need for the additional incorporation into the polymer composition of an internal and/or external lubricant. Not only organic carboxylic acids, but also substituted or unsubstituted phenolic compounds may be employed to form the metal salts for use in the stabilizer compositions according to the invention. As a rule, the phenols are substituted with hydrocarbon substituents containing 4 to 24 carbon atoms. Examples of suitable phenols include : n-butyl phenol, isooctyl phenol, p-phenyl phenol, octadecyl phenol and o- or p-phenyl phenol. Optionally, the stabilizer compositions according to the invention may contain internal and/or external lubricants, antioxidants and/or compounds to improve the impact resistance. These agents also may be added separately to the (co)polymer to be stabilized. The same applies to the separate constituents of the stabilizer compositions according to the invention.

The amount of stabilizer composition is usually in the range of from 0,5 to 10, preferably 2 to 6 parts by weight per 100 parts by weight of polymer.

Per 100 parts of polymer or copolymer there will generally be incorporated :

0,2 to 3 parts of polyol;

0,1 to 1 part of α-phenyl indole or a mixture of benzoyl alkaloyl methane;

0,5 to 3 parts of metal salt(s).

Preference is given to adding 0,2 to 0,3 parts of organic stabilizer per 100 parts of polymer in a combination with a polyol having secondary hydroxyl groups, such as sorbitol. In the case where the organic stabilizer employed is a β-ketoester, such as the stearyl ester of acetylacetic acid, these stabilizers are added in an amount of 0,3 to 2 parts, preferably 0,5 to 0,8 parts per 100 parts of polymer in combination with a polyol having primary hydroxyl groups, such as pentaerythritol and dipentaerythritol.

The stabilizer compositions of the present invention are particularly suitable for improving the thermal stability of any conceivable type of polyvinyl chloride resin, however it may be prepared. In this connection mention is made of solution polymerization, emulsion polymerization and suspension polymerization.

0058447
ACR 1852 R

The term "polyvinyl chloride" as used herein not only embraces all conceivable types of homopolymers of vinyl chloride and post-chlorinated polyvinyl chloride, but also copolymers having vinyl chloride as their major component, and a small amount of other copolymerizable monomers, such as copolymers of vinyl chloride and vinyl acetate, copolymers of vinyl chloride and vinylidene chloride, copolymers of vinyl chloride and acrylonitrile, copolymers of vinyl chloride and maleic or fumaric esters and copolymers of vinyl chloride and styrene, and also mixtures containing a high proportion of polyvinyl chloride resin and a low proportion of some other synthetic resin, such as chlorinated polyethylene, copolymers of acrylonitrile, butadiene and styrene.

The invention is further illustrated in, but not limited by the following examples.

The heat stability ratings of the compositions stabilized were determined by first blending the various components of each specific formulation on a two-roll laboratory mill for 5 minutes at 160°C until the mixture was entirely homogeneous. The sheet issuing from the mill was cut into test specimens about 1,5 mm thick. The specimens were heated in a forced-circulation air oven at 185°C, from which they were removed at 15 minutes' intervals, after which they were visually rated for colour change. This colour change was used as a measure of the decomposition rate of the PVC compound. The results of the test runs are denoted by a rating (0 through 6). The rating of 0 indicates that the test specimen was colourless, the rating of 1 that it was a pale yellow, the rating of 2 that it was yellow, the rating of 3 that it was a light orange, the rating of 4 that it was orange, the rating of 5 that the specimen was red and the rating of 6 that it was black. Generally, a stabilizer composition is considered suitable for use when the colour development in the oven test sets in slowly (a colour development from 0 to 1 in 60 minutes), a subsequent slow colour change from 1 to 3 or 4 takes place, and finally the colour gradually turns red to deep brown and black after at least 120 minutes.

Example I

The following "rigid" PVC formulation was prepared and tested in the above-described manner :

|  | Parts by weight |
|---|---|
| PVC | 100 |
| lubricant { cetyl/stearyl alcohol | |
| butyl montanate | 0,5 |
| 2,6-di-tert. butyl-4-methyl phenol | 0,1 |
| epoxidized soybean oil | 3 |
| calcium benzoate | 0,29 |
| zinc stearate | 0,38 |
| stearyl ester acetylacetic acid | 0,67 |
| polyol | 0,67 |

The results are summarized in the following table.

0058447
ACR 1852 R

Table 1

| time in min at 185°C<br>0,67 parts polyol | 0 | 15 | 30 | 45 | 60 | 75 | 90 | 105 | 120 |
|---|---|---|---|---|---|---|---|---|---|
| - | 0 | 0 | 0 | 0/1 | 0/1 | 1/2 | 3 | 6 | - |
| mannitol | 0 | 1 | 2 | 2 | 3 | 3/4 | 4 | 5 | 5 |
| sorbitol | 0/1 | 1/2 | 2 | 2 | 3 | 4 | 4 | 5 | 5 |
| glycerol | 0 | 0 | 0 | 0/1 | 0/1 | 0/1 | 2 | 6 | - |
| pentaerythritol (PET) | 0 | 0 | 0 | 0/1 | 0/1 | 0/1 | 2 | 6 | - |
| dipentaerythritol (diPET) | 0 | 0 | 0/1 | 1 | 2 | 2/3 | 3 | 5 | 5 |
| tripentaerythritol (triPET) | 0 | 0 | 0 | 0/1 | 1 | 2 | 3 | 5 | 5 |
| trimethylol propane (TMP) | 0 | 0 | 0 | 0/1 | 0/1 | 1 | 2 | 6 | - |
| ditrimethylol propane (diTMP) | 0 | 0 | 0 | 0 | 0/1 | 0/1 | 3 | 6 | - |
| TMP/PET 2/1 | 0 | 0 | 1 | 1 | 1 | 1/2 | 2 | 2 | 6 |
| TMP/PET 1/1 | 0 | 0 | 1 | 1/2 | 1/2 | 1/2 | 2 | 2/3 | 4 |
| TMP/PET 1/2 | 0 | 0 | 1 | 1/2 | 1/2 | 1/2 | 2 | 2/3 | 4 |
| TMP/diPET 2/1 | 0 | 0 | 0/1 | 1 | 1/2 | 1/2 | 2 | 2/3 | 4 |
| TMP/triPET 2/1 | 0 | 0 | 1 | 1 | 1/2 | 1/2 | 2 | 2 | 3/4 |
| TMP/mannitol 2/1 | 0 | 0/1 | 1/2 | 2 | 2 | 2/3 | 3 | 2/3 | 3/4 |
| TMP/sorbitol 2/1 | 0/1 | 0/1 | 2 | 2 | 2/3 | 2/3 | 3 | 2/3 | 4 |
| TMP/glycerol 2/1 | 0 | 0 | 0/1 | 0/1 | 0/1 | 1 | 1 | 6 | - |
| mannitol/PET 2/1 | 0/1 | 1 | 2 | 2/3 | 3 | 3/4 | 4 | 4/5 | 5 |
| diTMP/PET 2/1 | 0 | 0 | 0 | 0/1 | 1 | 1 | 2 | 2/3 | 5/6 |
| diTMP/PET 1/1 | 0 | 0 | 0 | 0/1 | 1 | 1 | 2 | 2/3 | 4 |
| diTMP/PET 1/2 | 0 | 0 | 0 | 0/1 | 1 | 1 | 2 | 2/3 | 4 |
| diTMP/diPET 2/1 | 0 | 0 | 0 | 0 | 0/1 | 0/1 | 1/2 | 2 | 4 |
| diTMP/triPET 2/1 | 0 | 0 | 0 | 0/1 | 1 | 1 | 2 | 3 | 5 |
| diTMP/mannitol 2/1 | 0 | 1 | 1 | 2 | 2 | 2 | 2 | 2 | 3/4 |
| diTMP/sorbitol 2/1 | 0 | 1 | 1 | 2 | 2 | 2/3 | 2/3 | 2/3 | 4 |
| diTMP/glycerol 2/1 | 0 | 0 | 0 | 0/1 | 0/1 | 0/1 | 2 | 5 | 6 |
| mannitol/diPET 2/1 | 0/1 | 1 | 1/2 | 2/3 | 3 | 3/4 | 4 | 4/5 | 5 |

From the results contained in the above table it is clear that a slow colour develepment in combination with a gradual change to black after 120 minutes or longer is produced only in the case of the combination : ditrimethylol propane/pentaerythritol in a weight ratio between 2:1 and 1:2.

The best results are obtained when use is made of the combination: diTMP/ diPET in a weight ratio of 2:1. With the combination: diTMP/glycerol 2:1 the colour change sets in late. The change to black after 120 minutes, however, sets in fairly soon.

The best results have been found to be obtained using the combination diTMP/diPET in a weight ratio of 2:1.


Example II

The same test procedure was used as in Example I, except that the organic stabilizer employed had been prepared from a mixture of, int. al, benzoylstearoyl methane and benzoylpalmitoyl methane, marketed by Rhône Poulenc under the trade name Rhodiastab R 50.

The amount of Rhodiastab R 50 was 0,34 parts per 100 parts of PVC. The results are summarized in the following table.

Table 2

| 0,67 parts polyol \ time in min at 185°C | 0 | 15 | 30 | 45 | 60 | 75 | 90 | 105 | 120 | 135 |
|---|---|---|---|---|---|---|---|---|---|---|
| - | 0 | 0 | 0/1 | 1 | 2 | 6 | - | | | |
| mannitol | 0 | 0 | 0/1 | 1 | 1 | 1 | 2 | 3/4 | 4/5 | |
| sorbitol | 0 | 1 | 1 | 1/2 | 2 | 2 | 2/3 | 3/4 | 5 | |
| glycerol | 0. | 0 | 0 | 0/1 | 0/1 | 1 | 2 | 6 | - | |
| pentaerythritol (PET) | 0 | 0 | 0/1 | 0/1 | 1 | 3 | 6 | - | - | |
| dipentaerythritol (diPET) | 0 | 0 | 0 | 0/1 | 1 | 1 | 3 | 4/5 | 4/5 | |
| tripentaerythritol (triPET) | 0 | 0 | 0/1 | 0/1 | 1 | 3/4 | 4/5 | 5 | 5 | |
| trimethylolpropane (TMP) | 0 | 0 | 0/1 | 0/1 | 0/1 | 1/2 | 2 | 6 | - | |
| ditrimethylolpropane (diTMP) | 0 | 0 | 0 | 0/1 | 0/1 | 2 | 4/5 | 6 | - | |
| TMP/PET 2/1 | 0 | 0 | 0 | 0/1 | 1 | 1 | 2 | 4 | 6 | |
| TMP/PET 1/1 | 0 | 0 | 0 | 0/1 | 1 | 1 | 2 | 4 | 5 | 6 |
| TMP/PET 1/2 | 0 | 0 | 0 | 0/1 | 1 | 1 | 2 | 4/5 | 5 | 5/6 |
| TMP/diPET 2/1 | 0 | 0 | 0 | 0/1 | 1 | 1/2 | 2/3 | 4/5 | 5 | 6 |
| TMP/triPET 2/1 | 0 | 0 | 0 | 0/1 | 1 | 1/2 | 2/3 | 4/5 | 5 | 6 |
| TMP/mannitol 2/1 | 0 | 0 | 0/1 | 0/1 | 1 | 1 | 1/2 | 3/4 | 4 | 4 |
| TMP/sorbitol 2/1 | 0 | 0/1 | 1 | 1 | 1/2 | 1/2 | 2 | 3 | 4 | 4 |
| TMP/glycerol 2/1 | 0 | 0 | 0 | 0/1 | 1 | 1/2 | 2/3 | 6 | - | |
| mannitol/PET 2/1 | 0 | 0/1 | 1 | 1 | 1/2 | 1/2 | 2 | 4 | 5 | |
| diTMP/PET 2/1 | 0 | 0 | 0 | 0/1 | 1 | 2 | 4 | 6 | - | |
| diTMP/PET 1/1 | 0 | 0 | 0 | 0/1 | 0/1 | 1 | 3 | 4/5 | 6 | |
| diTMP/PET 1/2 | 0 | 0 | 0 | 0/1 | 1 | 2 | 4 | 4/5 | 6 | |
| diTMP/diPET 2/1 | 0 | 0 | 0 | 0/1 | 0/1 | 1 | 3 | 4/5 | 6 | |
| diTMP/triPET 2/1 | 0 | 0 | 0 | 0/1 | 1 | 3 | 4/5 | 5 | 6 | |
| diTMP/mannitol 2/1 | 0 | 0 | 0 | 0/1 | 0/1 | 1 | 2 | 2/3 | 4 | |
| diTMP/sorbitol 2/1 | 0 | 0/1 | 1 | 1 | 1 | 1 | 2 | 3 | 4 | |
| diTMP/glycerol 2/1 | 0 | 0 | 0 | 0/1 | 1 | 3 | 6 | | | |
| mannitol/diPET 2/1 | 0 | 0/1 | 1 | 1 | 1 | 3 | 4/5 | 5/6 | | |

The above table clearly shows that when use is made of this organic stabilizer, the most favourable results are obtained with the ditrimethylol propane/mannitol combination in a weight ratio of 2:1.

Example III

The same procedure was used as in Example I, with the exception that the organic stabilizer employed was α-phenyl indole in an amount of 0,34 parts per 100 parts of PVC. The results obtained with mixtures of ditrimethylol propane and sorbitol and ditrimethylol propane and dipentaerythritol are compared in the table below with the commercially available polyol mixture T34, which is a mixture of trimethylol propane and pentaerythritol.

Table 3

| 0,67 parts polyol / time in min. at 185°C | 0 | 15 | 30 | 45 | 60 | 75 | ·90 | 105 | 120 |
|---|---|---|---|---|---|---|---|---|---|
| TMP/PET (T 34) | 0 | 0 | 0/1 | 1 | 1 | 1/2 | 2 | 2 | 2/6 |
| diTMP/sorbitol 3,5/1 | 0 | 0/1 | 0/1 | 1 | 1 | 1/2 | 1/2 | 2 | 2/3 |
| diTMP/diPET 2/1 | 0 | 0 | 0/1 | 1 | 1 | 1/2 | 2 | 2 | 3 |

The above table clearly shows the great advantage of the stabilizer compositions according to the invention containing a synergistic amount of di TMP.

CLAIMS

1. A stabilizer composition for polymers or copolymers of vinyl chloride in which an organic stabilizer, a metal salt of an acid, organic compound and a polyol are incorporated, characterized in that the polyol used is ditrimethylol propane in combination with a synergistic amount of some different polyol having 5 to 15 carbon atoms and 2 to 10 hydroxyl groups and a melting point not lower than 100°C.

2. A stabilizer composition according to claim 1, characterized in that the weight ratio between the ditrimethylol propane and the other polyol is in the range of from 6:1 to 1:3.

3. A stabilizer composition according to claim 2, characterized in that when the other polyol is a polyol having secondary hydroxyl groups, the weight ratio between the ditrimethylol propane and this polyol is preferably in the range of from 6:1 to 2:1.

4. A stabilizer composition according to claim 2, characterized in that when the other polyol is a polyol having primary hydroxyl groups, then the weight ratio between ditrimethylol propane and this polyol is preferably in the range of from 3:1 to 1:1.

5. A stabilizer composition according to one or more of the preceding claims, characterized in that the organic stabilizer is α-phenyl indole, benzoyl alkaloyl methane having 12 to 18 carbon atoms in the alkaloyl group and/or a nitrogen-free ketoacetic acid compound having at least 8 carbon atoms.

6. A stabilizer composition according to claim 5, characterized in that the nitrogen-free ketoacetic acid compound is the stearyl ester of acetyl acetic acid.

7. A stabilizer composition according to one or more of the preceding claims, characterized in that as metal salt there is chosen a zinc salt in combination with a synergistic amount of a calcium and/or mangnesium salt.

8. A stabilizer composition according to one or more of the preceding claims, characterized in that the other polyol is mannitol, sorbitol, pentaerythritol, dipentaerythritol and/or tripentaerythritol.

9. Polymers or copolymers of vinyl chloride containing a stabilizing amount of a stabilizer composition according to one or more of the preceding claims.

10. Polymers or copolymers of vinyl chloride according to claim 9, characterized in that the amount of stabilizer composition is in the range of from 0,5 to 10, preferably in the range of from 2 to 6 parts by weight per 100 parts by weight of polymer.

11. Shaped articles entirely or partly composed of a polymer or copolymer of vinyl chloride according to claim 9 or 10.

## European Patent Office

## EUROPEAN SEARCH REPORT

## DOCUMENTS CONSIDERED TO BE RELEVANT

| Category | Citation of document with indication, where appropriate, of relevant passages | Relevant to claim |
|---|---|---|
| Y | DE - A - 1 569 383 (SIEGLE) <br><br> * claim; example 1 * <br><br> -- | 1 |
| Y | CHEMICAL ABSTRACTS, volume 83, no. 22, 2nd December 1975, ref.180208u, page 45 COLUMBUS, OHIO (US) & JP - A - 75 58 143 (ADEKA ARGUS CHEMICAL CO.LTD.) 20th May 1975 <br><br> * abstract * <br><br> -- | 1 |
| D,A | CHEMICAL ABSTRACTS, volume 93, no.20, 17th November 1980 ref.187248x, page 34 COLUMBUS, OHIO (US) & J.VINYLTECHNOL.1980, 2(2) 87-94 (Eng.) ABBAAS K.B. et al.:"Heat stabilizers for poly(vinyl chloride).I.Synergistic systems based on calcium/zinc stearate" <br><br> * abstract * <br><br> -- | 1,7 |
| D,A | FR - A - 2 206 347 (PERSTORP) <br><br> * claim 1; page 1, lines 9-25; page 2, lines 10-12 * <br><br> & GB 1 400 919 <br><br> ---------- | |

### CLASSIFICATION OF THE APPLICATION (Int. Cl. 3)

C 08 L 27/06

### TECHNICAL FIELDS SEARCHED (Int.Cl. 3)

C 08 L
C 08 K

### CATEGORY OF CITED DOCUMENTS

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

| | The present search report has been drawn up for all claims | |
|---|---|---|
| Place of search | Date of completion of the search | Examiner |
| THE HAGUE | 16-04-1982 | BOLETTI |

EPO Form 1503.1   06.78